Europäisches Patentamt

European Patent Office

Office européen des brevets

(11) Publication number: **0 047 162**
**B1**

(12) **EUROPEAN PATENT SPECIFICATION**

(45) Date of publication of patent specification: **14.05.86**

(51) Int. Cl.⁴: **G 02 F 1/01**

(21) Application number: **81303963.3**

(22) Date of filing: **28.08.81**

(54) Kerr effect electro-optical element.

(30) Priority: **30.08.80 JP 120196/80**
**22.09.80 JP 131827/80**

(43) Date of publication of application:
**10.03.82 Bulletin 82/10**

(45) Publication of the grant of the patent:
**14.05.86 Bulletin 86/20**

(84) Designated Contracting States:
**DE FR GB NL**

(56) References cited:
**CH-A- 469 994**
**DE-A-2 719 483**
**DE-A-2 839 103**
**US-A-3 215 038**
**US-A-3 813 265**

**"Handbook of Optics", McGraw-Hill Book**
**Company, 1978, pages 17-13 to 17-15**

(73) Proprietor: **KUREHA KAGAKU KOGYO**
**KABUSHIKI KAISHA**
**9-11 Horidome-cho 1-chome Nihonbashi**
**Chuo-ku**
**Tokyo (JP)**

(72) Inventor: **Murayama, Naohiro**
**79-16 Aza-Suganezawa Taira-Kamata**
**Iwaki-shi Fukushima-ken (JP)**
Inventor: **Sakagami, Teruo**
**3 Machida Ushiroda-machi**
**Iwaki-shi Fukushima-ken (JP)**
Inventor: **Shoji, Masuhiro**
**72 Kamata Nishiki-machi**
**Fukushima-ken (JP)**

(74) Representative: **Bass, John Henton et al**
**REDDIE & GROSE 16 Theobalds Road**
**London WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to an electro-optical element such as a light modulation element showing an electro-optical effect.

An electro-optical effect is an effect shown by an optical medium such that when an electric field is applied to the optical medium, the refractive index of the medium changes. There are two types of electro-optical effect, namely, a linear electro-optical effect (Pockel's effect) and a secondary electro-optical effect (the Kerr effect). For example, among known materials showing electro-optical effects, inorganic crystals having no center of symmetry, such as $KH_2PO_4$ (KDP), $NH_4H_2PO_4$ (ADP), $LiNbO_3$ and PLZT show both Pockel's effect and the Kerr effect. However, Pockel's effect is generally greater than the Kerr effect in these materials. On the other hand, inorganic substances having a center of symmetry such as $Ba_2Na_2Nb_5O_{15}$, or fine crystal aggregates or liquids, such as ceramics having certain compositions such as PLZT, organic liquids such as nitrobenzene, acetophenone, benzyl alcohol, or carbon disulfide, and solutions prepared by dissolving polar substances such as nitrostyrene or nitroanisole in a solvent, show primarily the Kerr effect.

When these substances are used as electro-optical modulation elements, the preparation of the crystals is difficult in the case of single crystal materials because it involves withdrawal of the crystals from an aqueous solution or from a molten solution at high temperature. Further, when the material shows Pockel's effect, it is necessary to carry out electrolytic treatment at a temperature higher than the Curie point of the material and to divide the material into single units before use. However, while such an inorganic material has superior hardness, it has the drawback that it is brittle and cracks are likely to form prior to, during or after the electrolytic treatment, due to electric strain or temperature strain. Thus, it is hardly possible to obtain electro-optical material of high quality by mass production. Further, when it is subjected to an electric field, a piezo-electric property is imparted to the crystal. If it has a piezo-electric property, a vibration occurs when a voltage is repeatedly applied to it between the electrodes, and especially when the frequency of the applied voltage coincides with the resonant frequency of the element. Under these circumstances, retardation of transmission of light becomes abnormally high due to the birefringent effect of stress, and thus, the performance of the modulator is impaired. Further, a single crystal material has the birefringent property of the crystal itself. Therefore it is necessary to provide a wave length plate in order to reduce the retardation of light transmission caused by the birefringence of the crystal itself. Hence, there is a drawback that the optical system will inevitably become complicated.

It can be said, not only with respect to a single crystal but also with respect to ceramics such as PLZT, that an inorganic solid is generally hard and brittle and it is difficult to obtain an optically uniform solid of large size. Accordingly, there is the drawback that the cost becomes high.

With respect to organic substances showing electro-optical effects, conventional ones are either liquids or they are used in liquid form, by being dissolved in a suitable solvent. Accordingly, they are optically isotropic and thus have the merit that they show no birefringence when used as electro-optical elements. However, in the construction of a modulation element, they have to be sealed in a glass cell havingp a pair of parallel electrode plates sealed therein, and accordingly the element tends to have an extra thickness, which limits the possibility of minimizing the size of the element. There is an additional drawback that the glass cell and the electrodes are mechanically weak, and thus tend to lead to a degradation of performance or to a total break down due to deformation of breakage.

Superior electro-optical element having no such drawbacks as are inherent in the above mentioned known electro-optical materials made of inorganic substances or liquid organic substances may be produced if there is available a readily formable material such as a thermoplastic resin showing a large electro-optical effect. However, among known thermoplastic resins, there is no material which is known to show a good electro-optical effect and which is useful in practice. It is known that piezo-electric films made of polymers or co-polymers composed mainly of vinyl fluoride or vinylidene fluoride exhibit large electro-optical effects. It is assumed, however, that the apparent large electro-optical effects are caused by a change of the birefringence of the film having a stretch-orientation due to strain of the film which is, in turn, caused by inverse piezo-electricity created upon application of a voltage to the film having a stretch-orientation. In fact, with a film or other formed material having no stretch-orientation and little piezo-electricity, the electro-optical effects are extremely small. Further, the above mentioned piezo-electric films have the drawback that electro-optical effects shown by them are very much affected by temperature change.

US—A—3 215 038 describes the Kerr effect, and its application in fast acting switches for controlling light waves. These employ first and second light polarizers, one on either side of an electro-optical material which displays bi-refringent properties in an electric field, thus rotating the plane of polarization of light passing through the material. The polarizers are so disposed that the exit of light through the second polarizer can be controlled by energising the electro-optical material.

This document also describes devices utilizing the Stark effect, which concerns the action of an electric field upon the spectral lines of a material in the field, to act as a switch for controlling light waves. It particularly describes an electro-optical element which exhibits the Stark effect consisting of a transparent film of a resin which is a mixture of p. nitrophenol and at least one of polystyrene, polyvinyl chloride, polymethyl methacrylate, polyvinyl alcohol and polyvinyl acetate, sandwiched between electrically conducting transparent electrodes connected to a high voltage source.

Prior to the description of the embodiments, the general concept of the present invention will be described as follows:

As a result of extensive research, the present inventors have found that a solid solution obtained by dispersing a low molecular weight polar substance showing a Kerr type electro-optical effect in a polymer material compatible therewith, such as a thermoplastic resin, shows an extremely high electro-optical effect, and they have succeeded in obtaining a useful electro-optical element by the use of such a solid solution.

According to the study of the present inventors, there are many organic low molecular weight compounds showing large electro-optical effects, other than nitrobenzene, most of which are solid at normal temperatures. However, crystals of organic compounds are generally inferior in their mechanical strength, and accordingly, it is relatively difficult to finish them in their solid state to the smooth surface required for an optical element. For this reason, there has been no instance in which an organic substance which is solid at normal temperatures is used in practice as an electro-optical element, and there have been only a small number of cases in which the electro-optical effects have been measured.

However, cyclic compounds substituted with an electron attracting group such as a nitro group, a halogen group, an alkyl substituted sulfoxide group or a sulfonic acid ester group, generally show a fairly large electro-optical effect (Kerr effect). If these cyclic compounds have, in addition to such an electron attracting group, an electron donating group, such as an alkyl group, an amino group, an aminoalkyl group, an azo group, a hydroxyl group, an alkoxy group or a cyano group, their polarity is greater and they thus show a larger electro-optical effect.

According to the present invention, there is provided a Kerr effect electro-optical element comprising a polarizer disposed on the light-receiving side of a Kerr effect medium and an analyzer disposed on the light-emitting side of the medium, characterised in that the medium is a formed resin composition composed of a nitro aromatic compound or a nitro-substituted cyclic compound and a thermoplastic resin which is homogeneously miscible with said compound.

Examples of nitro aromatic compounds which may be used in electro-optical elements according to the invention are nitrobenzene, nitrotoluene, nitronaphthalene, nitrotetraline, nitroaniline, nitrostyrene, nitrotoluidine, nitrophenol, nitrobenzylamine, diaminonitrobenzene, aminonitronaphthalene, chloronitroaniline, nitrodiphenylamine, and nitrocarbazole. An example of a nitro-substituted cyclic compound for use in electro-optical elements according to the invention is nitropyridine. These compounds are preferred as they show a large Kerr effect and they are homogeneously miscible with synthetic resins.

The nitro compound (also referred to in this specification as the low molecular weight polar substance) has a low molecular weight relative to the thermoplastic resin (also referred to in this specification as the polymer substance), and is a substance having none or a small number of repeating polymerized units. These substances are usually unimolecular compounds, but may be substances which comprise a plurality of molecules, such as complexes. There is no particular limitation in their molecular weight. However, the molecular weight may be less than 1000 in most cases, and is preferably from 100 to 500.

It is preferred that the polymer substance to be used in the present invention is a transparent substance. Further, the polymer substance is required to be homogeneously miscible with the low molecular weight polar substance to be mixed therewith, since the electro-optical effect becomes greater as the proportion of the dispersed low molecular weight polar substance to the polymer substance increases.

The selection of the polymer substance must be made with care, taking into account the need for it to be homogeneously miscible with the low molecular weight polar substance to be mixed and dispersed in it. However, for example, polymethacrylates such as acrylic acid ester and polymethylmethacrylates, and thermoplastic resins such as polystyrene, polysulfone, polyvinylchloride, polycarbonate, BS resin, ABS resin and MBS resin are preferred. The polymer substance are preferably completely transparent. However, even when they are not completely transparent, they may still be useful provided that they become transparent when plastisized by the low molecular weight polar substance.

The Kerr type electro-optical material of the present invention may be produced by a known method. For instance, it may be produced by uniformly melt mixing the polymer substance and the low molecular weight polar substance on a roller surface heated to a temperature higher than their melting points and lower than their decomposition temperatures, as commonly used in polymer blending. Alternatively, the polymer substance and the low molecular weight polar substance may be dissolved in a solvent to obtain a uniformly mixed and dispersed liquid, and the solvent then the evaporated from the liquid to obtain a solid. Suitable solvents are, for example, acetone, methylethyl ketone, DMF, DMA, benzene, chloroform, carbon tetrachloride or trichloroethylene. As a further method, it is possible to immerse a resin composition in the above mentioned low molecular weight polar substance or a solution thereof, to diffuse and disperse the low molecular weight polar substance into the resin. In this case, it is possible that the low molecular weight substance has a concentration gradient in the composition, and in some cases, this concentration gradient is used to obtain a variation in the refractive index.

Preferred embodiments of the present invention will be described with reference to the accompanying drawings, in which:

Fig. 1 is a perspective view of an electro-optical element according to a first embodiment of the present invention;

Fig. 2 is a perspective view of an electro-optical element according to a second embodiment of the present invention;

Fig. 3 is a perspective view of an electro-optical element according to a third embodiment of the present invention;

Fig. 4 is a perspective view of a partially broken electro-optical element according to a fourth embodiment of the present invention;

Fig. 5 is a diagrammatic front view of a light intensity modulating apparatus wherein the electro-optical element of the first embodiment is used;

Fig. 6A is a diagrammatic front view of a light deflecting apparatus wherein the electro-optical element of the second embodiment is used;

Fig. 6B is a diagrammatic front view of the electro-optical element showing the optical path within the electro-optical element in the apparatus illustrated in Fig. 6A;

Fig. 7A is a diagrammatic perspective view of a light deflecting apparatus wherein the electro-optical element of the third embodiment is used;

Fig. 7B is a diagrammatic front view of the electro-optical element showing an optical path within the element in the apparatus illustrated in Fig. 7A; and

Fig. 8 is a diagrammatic front view of a light intensity modulating apparatus equipped with a Babinet-Soleil's compensator for the measurement of electro-optical effects.

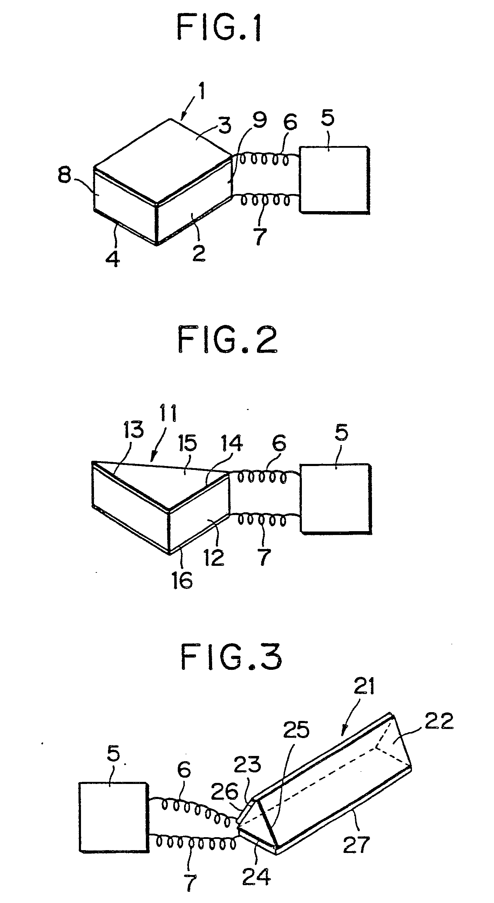

Fig. 1 illustrates an electro-optical element 1 of a rectangular body according to a first embodiment, in which p-nitroaniline is used as the low molecular weight compound showing an electro-optical effect and polymethylmethacrylate is used as the thermoplastic resin. An electro-optical resin layer 2 is composed of a resin composition melt formed by homogeneously mixing these materials in a weight ratio 2:8 and finished by polishing the surfaces. Electrodes 3 and 4 are attached to the opposite surfaces (surfaces of for example $5 \times 3$ mm$^2$) of the electro-optical resin layer 2 having a rectangular body shape of a size of for example 5 mm $\times$ 3 mm $\times$ 2 mm. Wires 6 and 7 extending from a power source 5 (direct or alternating current) are connected to the electrodes 3 and 4, respectively. This element 1 shows a Kerr constant of $1.7 \times 10^{-10}$ cm/V$^2$ when light enters one of a pair of opposite surfaces (for instance, surfaces 8 and 9 of $2 \times 3$ mm$^2$) on which no electrodes are provided, and light leaves the opposite surface.

Fig. 2 illustrates an electro-optical element 11 according to a second embodiment, in which an electro-optical resin composition 12 is of right-angled prism shape, having two converging sides 13 and 14 of for example 5 mm length and 2 mm width and having electrodes 15 and 16 attached to opposite parallel surfaces, as shown.

Fig. 3 illustrates an electro-optical element 21 according to a third embodiment. The electro-optical composition 22 is of regular triangular prism shape having sides 23, 24 and 25 of 3 mm and an axial length of 10 mm. A pair of independent electrodes 26 and 27 are attached to the two adjacent sides 23 and 24.

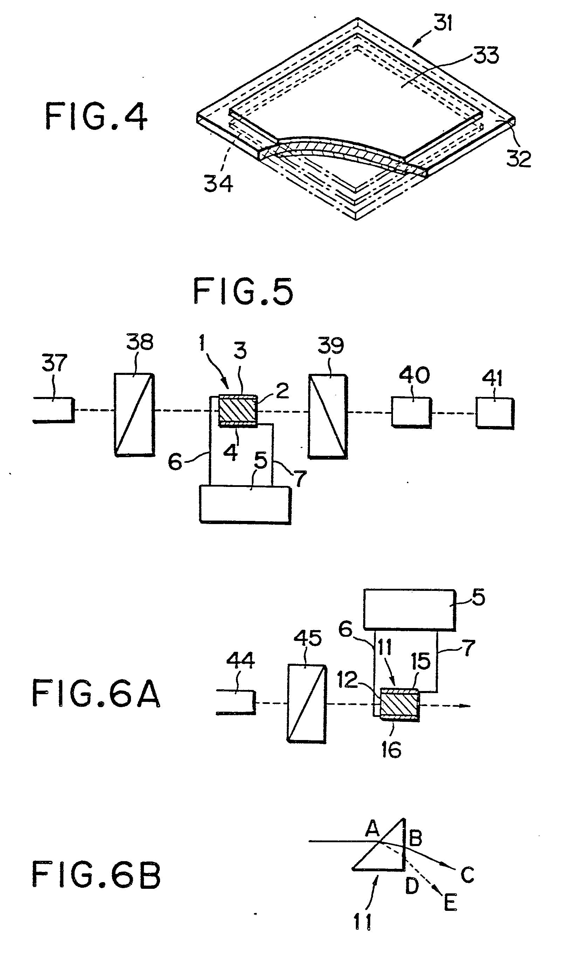

Fig. 4 illustrates an electro-optical element 31 according to a fourth embodiment, in the form of a film. The electro-optical resin composition film 32 has electrodes 33 and 34 on its surfaces. Further, one or both of the electrodes 33 and 34 may be constructed from a transparent conductive foil such as ITO (indium oxide-tin).

The electro-optical elements 1, 11, 21 and 31 illustrated in Figs. 1 to 4, are useful as elements for light intensity modulating apparatus and light deflecting apparatus in the same manner as conventional electro-optical elements. For instance, the electro-optical element 1 of Fig. 1 can be incorporated in a light intensity modulating apparatus as shown in Fig. 5. The element 1 with the electrodes 3 and 4 connected to the power source 5 via wires 6 and 7, is arranged so that the surface by which light enters is at right angles to the path of polarized light from a light source 37 passing through a polarizer 38, in order to avoid refraction of the light. The light passed through the electro-optical resin layer 2 passes through an analyzer 39 and is received by a light receiving element 40 disposed therebehind. The quantity of the light photoelectrically converted by the light receiving element 40 is recorded on a recorder 41 as an electric signal. Firstly, light is passed whilst no voltage is applied to the element 1, and the polarizer 38 and the analyzer 39 are set to cross at a right angle, to minimize the light passing through the analyzer 39. Then a voltage is applied across the electrodes 3 and 4, and the intensity of the light passing through the analyzer 39 is modulated to become greater as a result of a change in the retardation of the light passing through the element 1.

Thus, in the case in which the power source 5 is a direct current power source, the element 1 serves as a means for controlling the intensity of the light. In the case of an alternating current power source, a signal wave is obtainable in which the brightness changes correspond to the cycle of the alternating current.

Further, in the light intensity modulating apparatus of Fig. 5, it is possible to replace the element 1 by the film element 31 of Fig. 4. In this case, for example, the electrodes 33 and 34 are made of a transparent material and the element 31 is arranged at an inclination to the light path so that the light passed through one of the electrodes 33 or 34 passes obliquely through the electro-optical resin layer 32 and goes out through the other electrode 34 or 33, whereby, in the same manner as in the above case, the retardation of the light passing through the element 31 changes due to the voltage applied to the electrodes 33 and 34 and the light intensity can thereby be modulated. If one of the electrodes of the film element 31, for instance, the electrode 34, is made of an opaque material which reflects light, the light entering the transparent electrode 33, passes through the electro-optical resin layer 32, is reflected by the opaque electrode 34, passes again through the resin layer 32 and goes out through the transparent electrode 33. Accordingly, if the analyzer 39 and the light receiving element 40 are disposed in the light path of the reflected light, the light intensity can be modulated in the same manner as in the above case. In a case where the incoming light is not at a right angle to the film surface, as is the case here, there is a tendency for the light to undergo refraction in the film and light deflection, caused by the electro-optical effect, occurs. However, with a thin film, the change of the angle is minimal and it is usually possible to carry out substantially only the light intensity modulation.

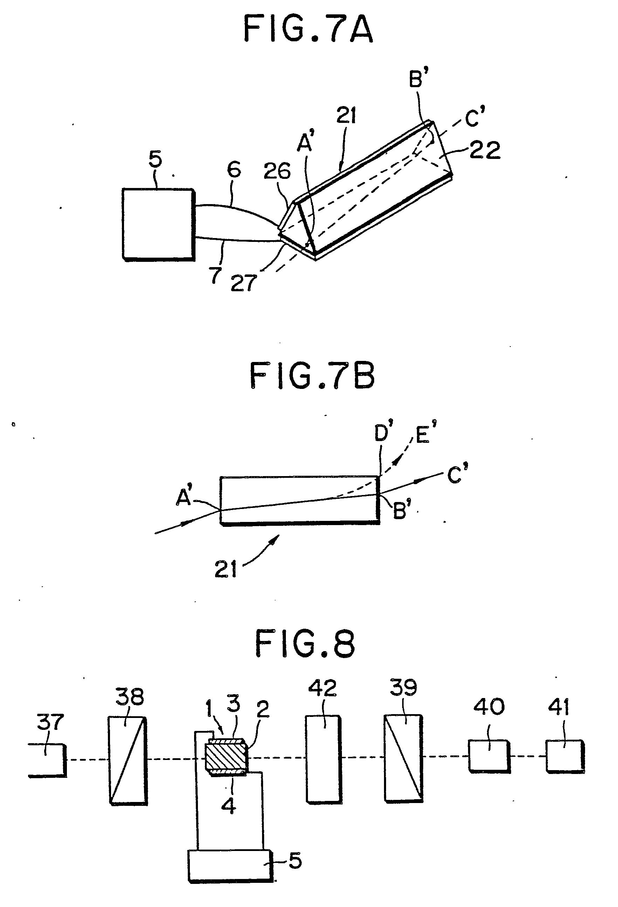

The electro-optical elements 11 and 21 of Figs. 2 and 3 can also be used for light intensity modulation. However, these elements 11 and 21 are particularly suitable for use as light deflecting elements (in certain cases, the element 1 of Fig. 1 is also useful as a deflecting element). Their practical applications will be described with respect to the light deflecting apparatus shown in Figs. 6 and 7.

Referring to Fig. 6A, the light from a light source 44 is polarized by a polarizer 45, then enters one of the surfaces of the prism shaped element 11 of Fig. 2 on which there are no electrodes, passes obliquely through the electro-optical resin layer 12 and goes out through the opposite surface. The light path is shown in Fig. 6B, in which the point at which the light enters the element 11 is designated by A, the outlet of the light when voltage is applied to the electrodes 15 and 16 is designated by B, and the direction of the outgoing light is designated by BC. When a voltage is applied across the electrodes 15 and 16, the refractive index to the polarized light changes, and as a result, the light entering at point A goes out from point D, as illustrated by the dotted line in Fig. 6B, and the out-going light travels in the direction DE. That is, the light BC is deflected to become the light following the path DE.

Fig. 7 illustrates a case wherein light passed through a polarized similar to one shown in Fig. 6, is passed through the element 21 of Fig. 3 for deflection. That is, as shown in Figs. 7A and 7B, light entering from point A' passes obliquely through the triangular prism shape element 21, reaches point B' and goes out in the direction B'C', when no electric field is applied. In this element 21, the nearer the electrodes 26 and 27 are to one of the apexes of the triangle, the closer they become to each other. Accordingly, when an electric field is applied between these electrodes, as the point A' is relatively far from both electrodes 26 and 27, the change in the refractive index of the resin near the point A' due to the electro-optical effect is minimal, and as the electrodes 26 and 27 are closer the point B', a change in the refractive index due to the electro-optical effect increases towards the point B'. Accordingly, the light passing through the element 21 is arcuately deflected towards the point where the refractive index is greater, as shown by the dotted line in Fig. 7B, as viewed from above the element 21, and the out-going light is deflected in the direction shown by D'E'.

In the embodiments shown in Figs. 6 and 7, a triangular flat plate shaped element 11 and a triangular prism shaped element 21 are used, respectively. However, these elements need not necessarily be of triangular shape, and they may take any other polygonal shape.

Methods for preparing the electro-optical elements which may be used in the above mentioned light intensity modulating apparatus or light deflecting apparatus will now be described.

## Example 1

As the nitro aromatic compound, p-nitroaniline was chosen, and as a thermoplastic resin, polymethylmethacrylate was selected. p-nitroaniline and polymethylmethacrylate were mixed in weight ratios of (1) 10:90 and (2) 20:80, respectively. Each mixture was dissolved in acetone, and well dispersed and mixed, and the solvent acetone was removed from the liquid thus obtained, with care not to cause foaming, whereupon solid compositions having weight ratios of p-nitroaniline to polymethylmethacrylate of (1) 10:90 and (2) 20:80, respectively, were obtained. These compositions were transparent yellowish substances.

The solid compositions thus prepared were melt formed, and then optically polished, whereupon electro-optical units 2 having a rectangular body shape of 5 mm × 3 mm × 2 mm as shown in Fig. 1 were obtained. Electrodes 3 and 4 were attached, respectively, to opposite surfaces of 5 mm × 3 mm of each electro-optical unit 2, to obtain a sample 1 for measuring an electro-optical effect. With use of the samples 1 thus obtained, their birefringence were measured by means of the measuring system shown in Fig. 8. In this measuring system as in the case of Fig. 5, reference numeral 5 designates a direct current power source, numeral 37 designates a He-Ne laser light source, and numerals 38 and 39 designate a polarizer and an analyzer, respectively, which are arranged to cross at a right angle to each other. Reference numeral 42 is a Babinet-Soleil's compensator, and numeral 40 designates a photo-diode. The quantity of the light detected after being photo-electrically converted by the photo-diode, is recorded on a recorder 41 as an electric signal.

The measurement was conducted in the following manner. Firstly, the light beam entering the sample 1 from the polarizer 38 was led in parallel with the electrodes 3, 4 attached to the electro-optical element 2 of the sample 1, and the Babinet-Soleil's compensator 42 was adjusted to minimize the light entering the photo-diode 40. Then, when a direct current voltage was applied to the sample 1, the birefringence of the electro-optical material 2 changed due to the electro-optical effect and as a result, the intensity of light entering the photo-diode 40 increased. The Babinet-Soleil's compensator 42 was adjusted to minimize the increased light intensity and from the reading of the micrometer of the Babinet-Soleil's compensator 42, the change in the birefringence was measured. It was found that the birefringence of the sample itself was very small and that the change of the birefringence was in proportion to the square of the applied voltage. It was confirmed that the electro-optical effect thereby obtained was a Kerr effect. Then, the Kerr constant was calculated from the birefringence, and the following results were obtained.

With the composition (1): $7.8 \times 10^{-11}$ cm/V$^2$

With the composition (2): $1.7 \times 10^{-10}$ cm/V$^2$

These values are approximately proportional to the concentrations of p-nitroaniline. Further, these values are very close to the Kerr constant of $3.3 \times 10^{-10}$ cm/V$^2$ of p-nitrobenzene itself.

For the purpose of comparison, a similar measurement was carried out on a sample of polymethylmethacrylate alone which was prepared in exactly the same manner as above, except that p-nitroaniline was omitted. It was found that the sample showed no electro-optical effect.

### Example 2

As nitro aromatic compounds, (a) p-nitroaniline, (b) o-nitroaniline, (c) 2-nitro-4-methoxyaniline, (d) p-nitro-o-chloroaniline, (e) 5-nitro-o-toluidine, (f) 2-nitro-diphenylamine, (g) 1,2-diamino-4-nitrobenzene and (h) p-nitrophenol, were chosen and as a polymer substance, polymethylmethacrylate was selected.

Each of the substances (a) to (h), showing electro-optical effects, and polymethylmethacrylate were mixed in a weight ratio of 10:90. Each mixture thereby obtained was dissolved in acetone in a manner similar to Example 1, whereby a molten liquid mixture was obtained. Each liquid mixture was cast on a glass with a transparent metal oxide electrode thereon and the solvent was carefully evaporated, whereupon an optically homogeneous cast film was obtained. Further, a ITO transparent electrode was vapour-deposited on the cast film, and electrode lead wires were taken out from the glass on the metal oxide electrode side and on the vapour-deposited ITO electrode side, to form a sample for measurement of the electro-optical effect. The thickness of the films were (a) 100 µm, (b) 230 µm, (c) 190 µm, (d) 180 µm, (e) 250 µm, (f) 250 µm, (g) 230 µm and (h) 220 µm.

Each of these samples were set in the electro-optical effect measuring system shown in Fig. 8 so that the incoming light beam and a line perpendicular to the surface of the glass with the metal oxide electrode were at an angle of 25° from each other, and the electro-optical effect was measured.

It was found that the changes in the birefringence of the films prepared by the above method were in proportion to the square of the electric field in all cases. From this, the electro-optical effect was found to be a Kerr effect. The Kerr constants of the respective films were as follows: (a) p-nitroaniline: $2.7 \times 10^{-12}$ cm/V$^2$, (b) o-nitro-aniline: $2 \times 10^{-12}$ cm/V$^2$, (c) 2-nitro-4-methoxy-aniline: $2.1 \times 10^{-12}$ cm/V$^2$, (d) p-nitro-o-chloro-aniline: $4.0 \times 10^{-12}$ cm/V$^2$, (e) 5-nitro-o-toluidine: $4.4 \times 10^{-12}$ cm/V$^2$, (f) 2-nitro-diphenylamine: $1.1 \times 10^{-12}$ cm/V$^2$, (g) 1,2-diamino-4-nitrobenzene: $4.1 \times 10^{-12}$ cm/V$^2$ and (h) p-nitrophenol: $0.98 \times 10^{-12}$ cm/V$^2$.

### Example 3

As the nitro aromatic compound p-nitroaniline was chosen, and as a polymer substance, polyvinylacetate was selected. They were mixed in a weight ratio of 10:90. Cast films having thick-nesses of 130 µm and 310 µm were prepared on glass with a metal oxide electrode in the same manner as in Example 2. The electro-optical effects of these films were measured in the same manner as in Example 2, whereupon it was found that their Kerr constants were $8.0 \times 10^{-12}$ cm/V$^2$ and $19 \times 10^{-12}$ cm/V$^2$, respectively.

As described above, the electro-optical materials having electro-optical effects according to the present invention are optically uniform, show no birefringence and are easier to form. Thus, they are extremely useful as materials for dynamic optical products.

**Claims**

1. A Kerr effect electro-optical element comprising a polarizer disposed on the light-receiving side of a Kerr effect medium and an analyzer disposed on the light-emitting side of the medium, characterised in that the medium is a formed resin composition composed of a nitro aromatic compound or a nitro-substituted cyclic compound and a thermoplastic resin which is homogeneously miscible with said compound.

2. A Kerr effect electro-optical element according to claim 1, wherein the nitro aromatic compound or nitro-substituted cyclic compound contains an electron donating group.

3. A Kerr effect electro-optical element according to claim 1 or 2, wherein the molecular weight of the nitro aromatic compound or nitro-substituted cyclic compound is within the range of 100 to 500.

4. A Kerr effect electro-optical element according to any preceding claim, wherein the thermo-plastic resin comprises methacrylate, poly-styrene, polyvinylchloride, or polyvinyl acetate.

5. A Kerr effect electro-optical element according to any preceding claim, wherein the thermoplastic resin is transparent.

6. A Kerr effect electro-optical element according to any preceding claim, wherein the thermoplastic resin is plasticized by the nitro aromatic compound or nitro-substituted cyclic compound, thereby rendering the formed resin composition transparent.

## Patentansprüche

1. Elektro-optisches Kerr-Effekt-Element mit einem auf der Lichtempfangsseite eines Kerr-Effekt-Mediums angeordneten Polarisator und einem auf der Lichtemissionsseite des Mediums angeordneten Analysator, dadurch gekennzeichnet, daß das Medium eine formierte Harzverbindung ist, die aus einer aromatischen Nitroverbindung oder einer zyklischen nitrosubstituierten Verbindung und einem thermoplastischen Harz besteht, das mit der genannten Verbindung homogen mischbar ist.

2. Elektro-optisches Kerr-Effekt-Element nach Anspruch 1, dadurch gekennzeichnet, daß die aromatische Nitroverbindung oder die zyklische nitrosubstituierte Verbindung eine Gruppe enthält, die einen Elektronendonator bildet.

3. Elektro-optisches Kerr-Effekt-Element nach Anspruch 1 oder 2, dadurch gekennzeichnet, daß das Molekulargewicht der aromatischen Nitroverbindung oder der zyklischen nitrosubstituierten Verbindung im Bereich von 100 bis 500 liegt.

4. Elektro-optisches Kerr-Effekt-Element nach einem der vorhergehenden Ansprüche, dadurch gekennzeichnet, daß das thermoplastische Harz Methacrylat, Polystyrol, Polyvinylchlorid oder Polyvinylazetat enthält.

5. Elektro-optisches Kerr-Effekt-Element nach einem der vorhergehenden Ansprüche, dadurch gekennzeichnet, daß das thermoplastische Harz transparent ist.

6. Elektro-optisches Kerr-Effekt-Element nach einem der vorhergehenden Ansprüche, dadurch gekennzeichnet, daß das thermoplastische Harz durch die aromatische Nitroverbindung oder die zyklische nitrosubstituierte Verbindung plastifiziert wird, wodurch die formierte Harzverbindung transparent gemacht wird.

## Revendications

1. Elément électro-optique à effet Kerr comportant un polariseur disposé sur le côté de réception de la lumière d'un milieu à effet Kerr et un analyseur disposé sur le côté d'émission de lumiére du milieu, caractérisé en ce que le milieu est une composition résineuse mise en forme, faite d'un composé nitro-aromatique ou d'un composé cylique nitro-substitué et d'une résine thermoplastique qui est miscible de façon homogène avec ledit composé.

2. Elément électro-optique à effet Kerr selon la revendication 1, dans lequel le composé nitro-aromatique ou le composé cyclique nitro-substitué contient un groupe donneur d'électrons.

3. Elément électro-optique à effet Kerr selon la revendication 1 ou 2, dans lequel le poids moléculaire du composé nitro-aromatique ou du composé cyclique nitro-substitué se situe dans la plage de 100 à 500.

4. Elément électro-optique à effet Kerr selon l'une quelconque des revendications précédentes, dans lequel la résine thermoplastique consiste en du méthacrylate, du polystyrène, du chlorure de polyvinyle ou de l'acétate de polyvinyle.

5. Elément électro-optique à effet Kerr selon l'une quelconque des revendications précédentes, dans lequel la résine thermoplastique est transparente.

6. Elément électro-optique à effet Kerr selon l'une quelconque des revendications précédentes, dans lequel la résine thermoplastique est plastifiée par le composé nitro-aromatique ou le composé cyclique nitro-substitué, rendant ainsi transparente la composition de résine mise en forme.

# FIG.1

# FIG.2

# FIG.3

0 047 162

FIG.4

FIG.5

FIG.6A

FIG.6B

# FIG.7A

# FIG.7B

# FIG.8